# FASCICULE DE BREVET EUROPEEN

(11) **EP 0 865 895 B1**
(45) Date de publication et mention de la délivrance du brevet: **12.06.2002**
(21) Numéro de dépôt: 98400624.7
(22) Date de dépôt: 17.03.1998
(51) Int. Cl.: B29C 45/16, B60K 37/06

(54) **Procédé de réalisation d'une façade de tableau de commande en au moins trois matières pour chauffage de véhicule**
Verfahren zur Herstellung der Front eines Armaturenbrettes aus mindestens drei Stoffen für Fahrzeugheizung
Method for making a dashboardfront from at least three materials for vehicle heating

(30) Priorité: 18.03.1997 FR 9703270
(43) Date de publication de la demande: 23.09.1998
(73) Titulaire: AFE Plasturgie, 95580 Andilly (FR)
(72) Inventeur: Lopes, Albert, 95370 Saint-Prix (FR)
(74) Mandataire: Rousset, Jean-Claude

(56) Documents cités:
- WO-A-94/23925
- DE-C- 4 006 649
- GB-A- 2 261 187
- US-A- 5 227 222

## Description

L'invention concerne un procédé pour réaliser une façade de tableau de commande, notamment pour le chauffage de l'habitacle d'un véhicule, destinée à recevoir au moins un bouton de manoeuvre rotatif, comportant une platine qui définit une face avant de la façade et, pour chaque bouton de manoeuvre, une paroi tubulaire s'étendant vers l'arrière de la platine et se raccordant à celle-ci le long du bord d'une ouverture sensiblement circulaire qui y est ménagée, ladite paroi tubulaire présentant successivement, dans la direction axiale, une première région adjacente à ladite ouverture et ayant sensiblement le même rayon que celle-ci, logeant une tête de manoeuvre du bouton de manoeuvre sur une partie au moins de la longueur axiale de celle-ci, et une seconde région de plus petit rayon que la tête de manoeuvre, raccordée à la première région par un épaulement, logeant et guidant en rotation une tige de guidage du bouton, la tête de manoeuvre et ladite face avant, au voisinage de l'ouverture, portant des repères et/ou des symboles qui peuvent être mis mutuellement en regard selon la position en rotation du bouton, et qui peuvent être éclairés, à travers la matière du bouton et de la façade, à partir d'une source lumineuse disposée en arrière de cette dernière.

Un tel procédé est connu du document DE-A-40 06 649.

Le terme "rayon" désigne ici une distance par rapport à un axe, qui peut varier dans la direction circonférentielle lorsque l'élément considéré n'est pas rigoureusement circulaire. Dans ce cas, les inégalités mentionnées pour les rayons d'éléments différents doivent être vérifiées tout autour de l'axe.

On désigne par "face avant" la face de la platine tournée vers l'utilisateur du tableau de commande, et les termes "avant" et "arrière" se réfèrent à cette convention. Il est à noter que, dans le cas d'un tableau de commande de chauffage de véhicule, la face avant est généralement tournée vers l'arrière du véhicule.

Il est connu de former la face avant de la platine par un film en matière thermoplastique transparente qui est encré par sérigraphie pour former des repères et/ou symboles colorés et pour rendre opaque le reste de la surface. L'épaulement de la paroi tubulaire, qui se trouve derrière la tête de manoeuvre du bouton, doit permettre le passage de la lumière provenant de la source lumineuse pour éclairer au moins un repère présent sur la tête et destiné à venir en regard de différents symboles en fonction de la position en rotation du bouton. En revanche, la lumière ne doit pas passer autour de la tête du bouton, entre celle-ci et la première région de la paroi tubulaire.

A cet effet, il a été proposé de réaliser la paroi tubulaire en matière transparente, et d'emboutir le film sérigraphié de façon qu'il recouvre également une partie de la face interne de la paroi tubulaire, jusqu'en arrière de l'intervalle annulaire entre la première région de celle-ci et la tête de manoeuvre. On a constaté alors une déformation des symboles et repères lors de l'emboutissage, ainsi que des déchirures et craquelures du film, conduisant à un taux de rebut élevé.

Le but de l'invention est de remédier aux inconvénients ci-dessus.

L'invention vise notamment un procédé du genre défini en introduction, et prévoit que la façade est obtenue par les étapes suivantes:
a) on place dans un moule un film plat monocouche d'une première matière thermoplastique, présentant au moins une ouverture légèrement plus petite que l'ouverture à former dans la platine et portant au voisinage de cette ouverture les repères ou symboles à obtenir sur ladite face avant, le film étant appliqué sur une plaque formée par un premier élément du moule et étant serré, le long du bord de son ouverture, autour d'un bossage dudit premier élément qui fait saillie par rapport à ladite plaque;
b) on injecte une seconde matière thermoplastique opaque dans une cavité annulaire du moule entourant ledit bossage et contenant une zone annulaire du film adjacente à l'ouverture, qui est plaquée par la matière injectée contre la plaque et contre le bossage, le film étant pincé dans le moule, de façon étanche à la matière injectée, autour de ladite zone annulaire, et le moule étant dimensionné de telle manière que le film définisse la face avant de la platine et que la seconde matière injectée définisse une partie de la paroi tubulaire limitée à une fraction de son épaisseur, adjacente à sa face interne, et se terminant à l'arrière par une ouverture axiale de rayon légèrement plus petit que celui de la tête de manoeuvre;
c) on injecte sur l'ébauche obtenue à l'étape b) une troisième matière thermoplastique conductrice de la lumière pour compléter l'épaisseur de la platine et la paroi tubulaire,
la nature chimique et la température d'injection de chacune des seconde et troisième matières thermoplastiques étant choisies de manière que celle-ci se lie solidement, lors de son injection, à la précédente ou aux précédentes sans déformation de celle(s)-ci.

Des caractéristiques optionnelles de l'invention, complémentaires ou alternatives, sont énoncées ci-après:
- d) on injecte sur l'ébauche obtenue à l'étape c) une quatrième matière thermoplastique opaque pour former un rebord périphérique de la façade s'étendant vers l'arrière à partir de la platine, la nature chimique et la température d'injection de la quatrième matière thermoplastique étant choisies de manière que celle-ci se lie solidement, lors de son injection, aux première et troisième matières thermoplastiques sans déformation de celles-ci.
- La face arrière du film reste non recouverte par la troisième matière lors de l'étape c), et est recouverte par la quatrième matière lors de l'étape d), sur une région périphérique de façon à renforcer la liaison entre le film et la quatrième matière.
- La première matière est à base de polycarbonate, la seconde matière est à base d'un mélange de polycarbonate et d'ABS, la troisième matière est à base d'au moins un polymère choisi parmi le polyméthacrylate de méthyle et le polycarbonate et la quatrième matière éventuelle est à base d'ABS.
- Les températures d'injection des matières successives sont d'environ 280 °C pour l'étape b), 240 °C pour l'étape c) et le cas échéant 230 °C pour l'étape d).
- La première matière est sensiblement transparente et des repères et/ou symboles colorés et/ou des plages opaques sont formés par sérigraphie sur la face avant du film avant l'étape a).
- Le film est découpé dans une nappe plane et définit pour la platine une face avant plane ou dérivant d'une surface plane par une courbure sans étirement ou contraction le long de la surface.

Les caractéristiques et avantages de l'invention seront exposés plus en détail dans la description ci-après, en se référant aux dessins annexés, sur lesquels:
- la figure 1 est une vue en coupe, selon la ligne I-I de la figure 2, de la façade d'un tableau de commande selon l'invention, sur laquelle est monté un bouton de manoeuvre;
- la figure 2 est une vue de face de l'ensemble de la figure 1;
- la figure 3 est une vue de face d'un film découpé et sérigraphié destiné à former la face avant de la façade;
- les figures 4, 6, 9 et 11 sont des vues partielles en coupe montrant des étapes successives de la fabrication de la façade;
- les figures 5 et 7 sont des détails agrandis des figures 4 et 6 respectivement; et
- les figures 8, 10 et 12 sont des vues partielles en coupe montrant les ébauches et la façade terminée obtenues à la suite des étapes des figures 6, 9 et 11 respectivement.

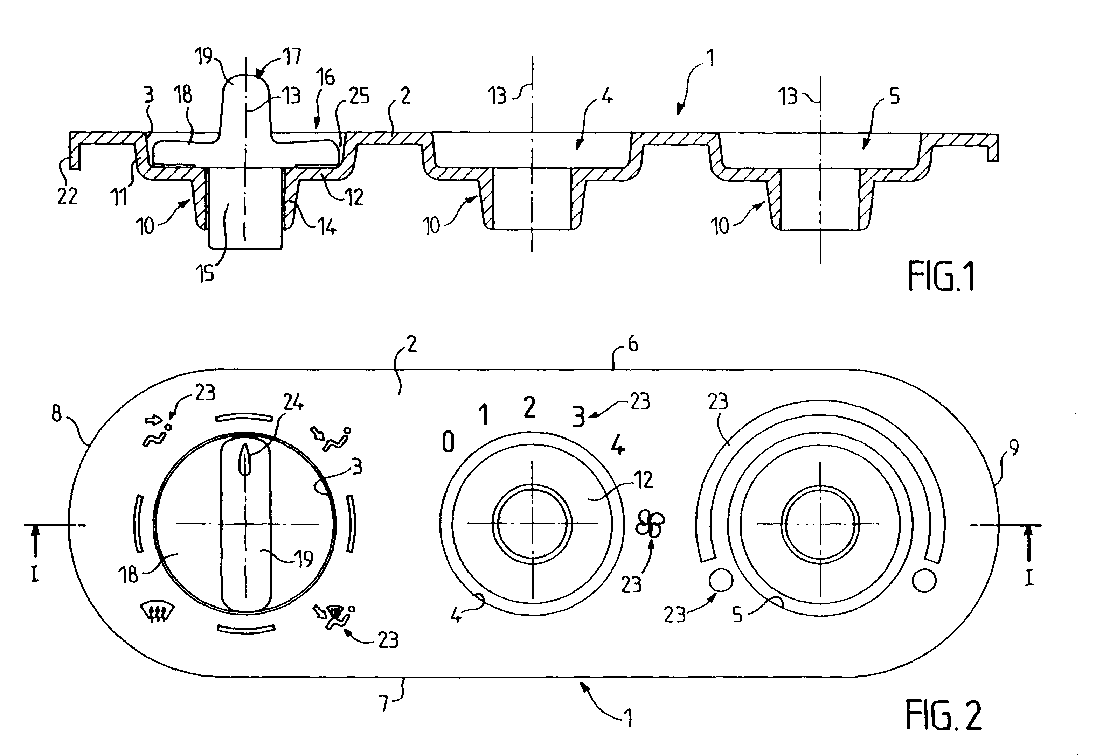

La façade 1 représentée sur les figures 1 et 2 comporte une platine plane 2 présentant trois ouvertures circulaires de même rayon mutuellement alignées 3, 4 et 5. La platine 2 a une forme allongée dans la direction d'alignement des ouvertures, délimitée par des bords longitudinaux rectilignes supérieur et inférieur 6, 7 et deux extrémités semi-circulaires convexes 8 et 9. Le long du bord de chacune des ouvertures 3 à 5, la platine se raccorde à une paroi tubulaire 10 s'étendant vers l'arrière, comprenant une première région 11 légèrement tronconique se rétrécissant à partir de la platine, puis un épaulement plan radial 12 se rapprochant de l'axe 13 de l'ouverture et de la paroi tubulaire à partir de la région 11, et enfin une région 14 s'éloignant de nouveau du plan de la platine à partir de l'épaulement 12, la région 14 ayant une face interne cylindrique et une face externe légèrement tronconique pour faciliter le démoulage. La région 14 assure le guidage en rotation de la tige cylindrique 15 d'un bouton de manoeuvre 16, ce dernier comprenant également une tête de manoeuvre 17 formée d'une collerette plate 18 de contour circulaire, logée radialement à l'intérieur de la région 11 de la paroi tubulaire 10, et d'une nervure diamétrale 19 faisant saillie en avant de l'ouverture 3, 4, 5. Pour simplifier le dessin, un seul bouton 16 est destiné, associé à l'ouverture 3. Cependant, le tableau de commande complet comprend autant de boutons de manoeuvre que d'ouvertures. La façade 1 présente également un rebord périphérique 22 s'étendant vers l'arrière à partir du périmètre de la platine 2.

Comme on le voit sur la figure 2, des symboles 23 apparaissent sur la face avant de la platine 2, autour de chacune des ouvertures 3, 4 et 5. Par ailleurs, la nervure 19 du bouton 16 présente à l'une de ses extrémités diamétrales un repère 24 en forme de pointe de flèche. Ce bouton, et des boutons identiques associés aux ouvertures 4 et 5, peuvent être placés dans différentes positions angulaires autour des axes 13 de façon que les repères 24 viennent en regard de différents symboles 23. Les symboles et repères sont éclairés, à travers la façade et les boutons, à partir d'une ou plusieurs sources lumineuses non représentées disposées en arrière de la platine 2. Du fait de la position des repères 24, la lumière qui les atteint doit traverser les épaulements 12 des parois tubulaires. En revanche, aucune lumière ne doit sortir de l'interstice annulaire 25 entre la collerette 18 de chaque bouton et la région 11 de la paroi tubulaire correspondante. De même, la lumière ne doit pas traverser le rebord 22 pour former un halo lumineux autour de la façade 2.

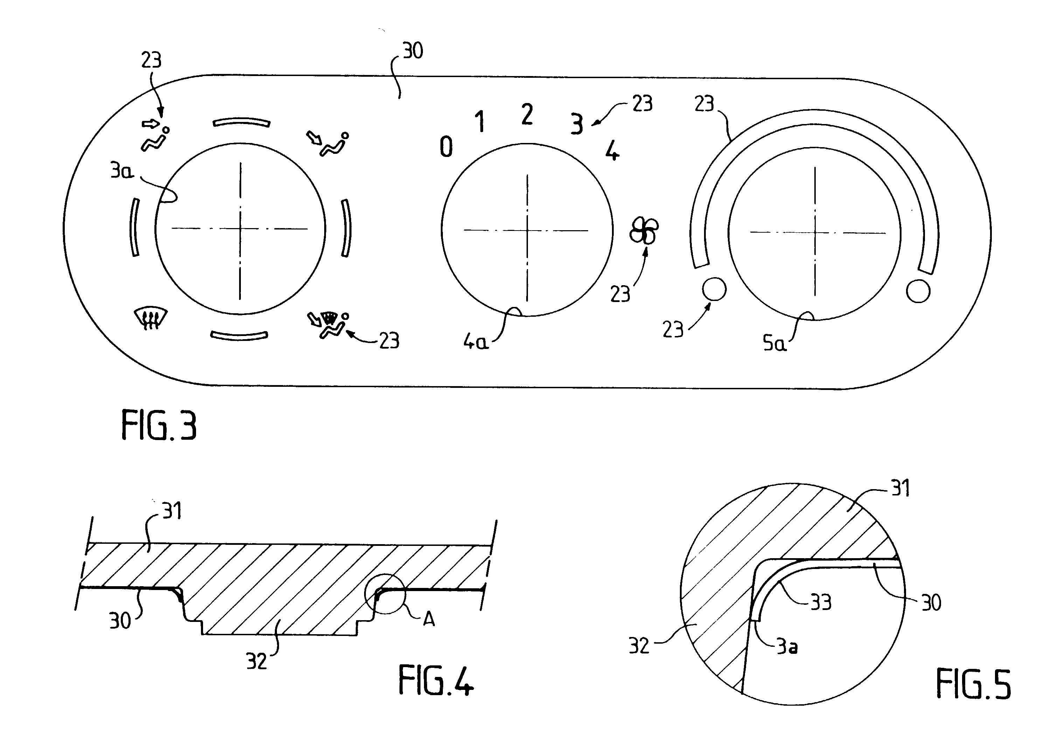

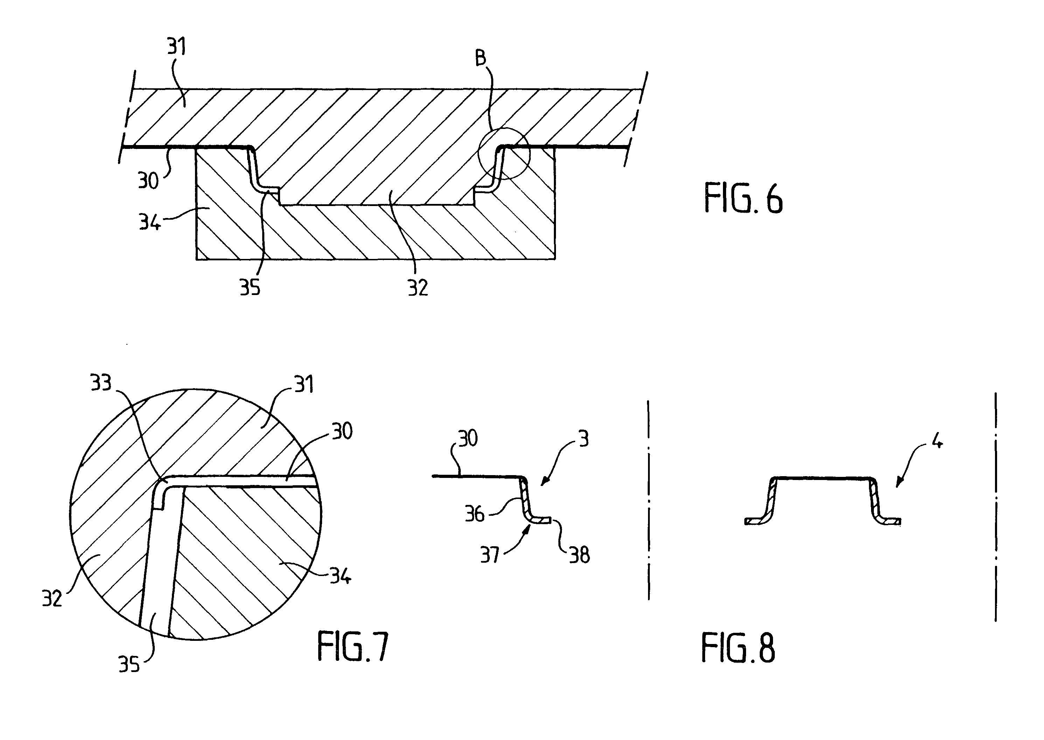

Pour réaliser la façade 1, on part de l'ébauche illustrée à la figure 3, découpée à partir d'un film plat monocouche en polycarbonate transparent d'épaisseur 0,3 mm, disponible dans le commerce, de façon à présenter le contour de la platine 2 tel que décrit plus haut, et trois ouvertures circulaires 3a, 4a, 5a, disposées comme les ouvertures 3, 4 et 5 et d'un diamètre très légèrement inférieur à celui de ces ouvertures. La face avant de l'ébauche 30 est encrée par sérigraphie pour former les symboles 23 et pour colorer en noir et rendre opaque le reste de la surface. La face avant encrée de l'ébauche 30 est appliquée sur une plaque métallique 31 à partir de laquelle font saillie trois bossages de révolution 32 qui pénètrent à force dans les ouvertures 3a, 4a, 5a en déformant et en écartant de la plaque 31 une zone annulaire 33 de l'ébauche entourant chacune de ces ouvertures, comme le montrent les figures 4 et 5. On associe ensuite, comme on le voit sur les figure 6 et 7, la partie mâle de moule constituée par la plaque 31 munie des bossages 32 à une partie femelle 34 pour définir, autour de chaque bossage, une cavité annulaire 35 contenant la zone annulaire 33. On injecte dans cette cavité un mélange opaque de polycarbonate et de copolymère acrylonitrile-butadiène-styrène (ABS). La matière injectée vient plaquer la zone annulaire 33 contre la plaque 31 et la base du bossage 32, et mouille la face arrière de cette zone. La présence de polycarbonate dans le mélange permet d'assurer une bonne adhésion entre la matière injectée et le film de polycarbonate. La présence d'ABS permet d'effectuer l'injection à une température suffisamment basse, 280°C, pour éviter une déformation du film. Cette matière résiste en outre aux essais, notamment climatiques (90 °C et 95 % d'humidité), imposés dans les cahiers des charges des constructeurs automobiles. Autour de la zone 33, l'ébauche 30 est pincée entre les deux parties du moule de façon à limiter l'écoulement de la matière injectée.

La figure 8 montre l'élément annulaire 36 moulé en polycarbonate/ABS autour de l'ouverture 3 et, en partie, celui moulé autour de l'ouverture 4.

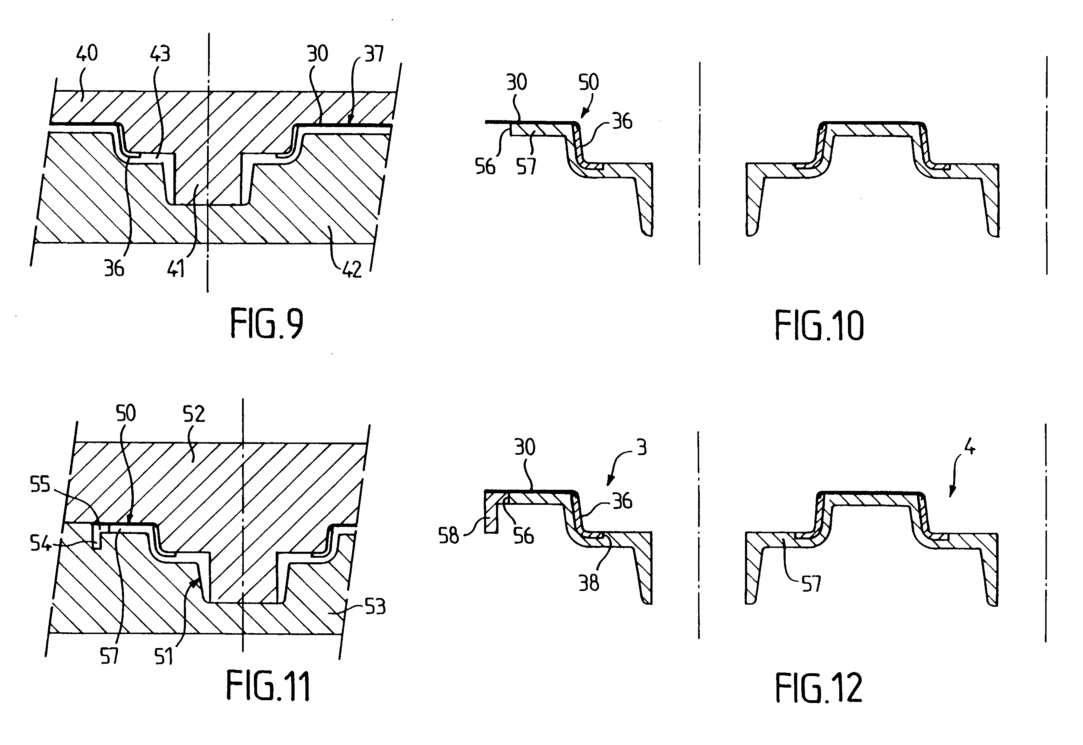

L'ébauche 37 ainsi obtenue est transférée dans un second moule (figure 9) composé d'une partie mâle 40 sous forme d'une plaque munie de trois bossages 41 et d'une partie femelle 42, qui délimitent entre elles une cavité 43. L'ébauche 37 se loge dans cette cavité, appliquée sur la partie mâle 40, 41. La forme géométrique de la cavité correspond à celle de la façade 1 à réaliser, sauf en ce qui concerne la périphérie de celle-ci, comme on le verra plus en détail plus loin.

Dans la partie de la cavité 43 non occupée par l'ébauche 37, on injecte du polyméthacrylate de méthyle transparent, à une température de 240°C à laquelle ne se produisent aucune dégradation et aucune déformation de l'ébauche 37. Cette matière résiste également aux essais imposés par les cahiers des charges des constructeurs automobiles.

L'ébauche 50 ainsi obtenue, illustrée à la figure 10, est ensuite introduite dans la cavité 51, qu'elle remplit presque complètement, d'un troisième moule (figure 11) composé d'une partie mâle 52 et d'une partie femelle 53. La forme géométrique de la cavité 51 correspond exactement à celle de la façade 1 à réaliser. L'ébauche 50 n'y laisse libre qu'une région annulaire périphérique à profil en L dont une branche 54 correspond au rebord 22 de la façade et dont l'autre branche 55 s'étend le long de la face arrière du film 30, entre la branche 54 et le bord périphérique 56 de l'élément 57 formé par injection dans le moule de la figure 9, le bord 56 étant, comme on le voit sur la figure 10, légèrement en retrait par rapport au bord périphérique du film 30. On injecte dans la cavité résiduelle 54, 55 de l'ABS noir, à une température de 230°C à laquelle aucune dégradation de l'ébauche 50 ne se produit.

La figure 12 montre comment sont disposées géométriquement les différentes matières constitutives de la façade, grâce à un dimensionnement approprié des moules utilisés.

Le film 30 couvre la totalité de la face avant de la platine 2, ainsi que l'arrondi reliant cette face à la face interne de la paroi tubulaire 10, au niveau du bord de chaque ouverture 3, 4, 5. Chaque élément annulaire 36 en polycarbonate/ABS définit la face interne de la paroi tubulaire correspondante, en continuation du film 30, sur toute la longueur axiale de la région 11, sur l'arrondi reliant cette dernière à l'épaulement 12 et sur la partie périphérique de cet épaulement, au-delà du rayon de l'ouverture axiale 38 de l'élément 36. L'élément 57 en polyméthacrylate forme le reste des parois tubulaires 10, c'est-à-dire le complément de l'épaisseur de celles-ci au-delà de l'ouverture 38, et la totalité de son épaisseur en-deçà de celles-ci, ainsi que le complément de l'épaisseur de la platine 2, jusqu'au bord 56 placé à une faible distance du bord périphérique de la platine. Enfin, l'élément annulaire 58 en ABS, à profil en L, forme le complément de l'épaisseur de la platine au-delà du bord 56 et le rebord 22.

L'élément transparent 57, qui constitue la totalité de l'épaisseur de l'épaulement 12 de la paroi tubulaire 10 à l'intérieur de l'ouverture axiale 38 de l'élément 36, permet le passage de la lumière pour venir éclairer les repères 24 des boutons de manoeuvre. En revanche, l'élément opaque 36 empêche la lumière de parvenir dans l'intervalle annulaire 25 entre la collerette 18 du bouton et la région 11 de la paroi tubulaire. L'élément 58 également opaque empêche la lumière de passer à la périphérie de la façade.

En fonction de l'environnement du tableau de commande, la présence du rebord opaque 22 peut n'être pas nécessaire. Dans ce cas, l'élément 57 est prolongé jusqu'à l'aplomb du bord périphérique du film 30 et l'étape d) est supprimée. Au lieu d'être réalisée à part comme décrit, cette étape d) peut aussi l'être en même temps que l'étape b), en utilisant la même matière, si l'architecture de la pièce le permet.

Par ailleurs, au lieu d'être plane, la face avant de la platine 2 peut présenter un galbe convexe ou concave, selon un ou deux axes, obtenu est stabilisé par les surmoulages successifs.

## Revendications

1. Procédé pour réaliser une façade (1) de tableau de commande, notamment pour le chauffage de l'habitacle d'un véhicule, destinée à recevoir au moins un bouton de manoeuvre rotatif (16), comportant une platine (2) qui définit une face avant de la façade et, pour chaque bouton de manoeuvre, une paroi tubulaire (10) s'étendant vers l'arrière de la platine et se raccordant à celle-ci le long du bord d'une ouverture sensiblement circulaire (3-5) qui y est ménagée, ladite paroi tubulaire présentant successivement, dans la direction axiale, une première région (11) adjacente à ladite ouverture et ayant sensiblement le même rayon que celle-ci, logeant une tête de manoeuvre (17) du bouton de manoeuvre sur une partie au moins de la longueur axiale de celle-ci, et une seconde région (14) de plus petit rayon que la tête de manoeuvre, raccordée à la première région par un épaulement (12), logeant et guidant en rotation une tige de guidage (15) du bouton, la tête de manoeuvre et ladite face avant, au voisinage de l'ouverture, portant des repères et/ou des symboles (23, 24) qui peuvent être mis mutuellement en regard selon la position en rotation du bouton, et qui peuvent être éclairés, à travers la matière du bouton et de la façade, à partir d'une source lumineuse disposée en arrière de cette dernière, **caractérisé en ce que** la façade est obtenue par les étapes suivantes:
a) on place dans un moule (31, 34) un film plat monocouche (30) d'une première matière thermoplastique, présentant au moins une ouverture (3a-5a) légèrement plus petite que l'ouverture (3-5) à former dans la platine et portant au voisinage de cette ouverture les repères ou symboles (23) à obtenir sur ladite face avant, le film étant appliqué sur une plaque (31) formée par un premier élément du moule et étant serré, le long du bord de son ouverture, autour d'un bossage (32) dudit premier élément qui fait saillie par rapport à ladite plaque;
b) on injecte une seconde matière thermoplastique opaque (36) dans une cavité annulaire (35) du moule entourant ledit bossage et contenant une zone annulaire (33) du film adjacente à l'ouverture, qui est plaquée par la matière injectée contre la plaque (31) et contre le bossage (32), le film étant pincé dans le moule, de façon étanche à la matière injectée, autour de ladite zone annulaire, et le moule étant dimensionné de telle manière que le film définisse la face avant de la platine et que la seconde matière injectée définisse une partie de la paroi tubulaire limitée à une fraction de son épaisseur, adjacente à sa face interne, et se terminant à l'arrière par une ouverture axiale (38) de rayon légèrement plus petit que celui de la tête de manoeuvre;
c) on injecte sur l'ébauche (37) obtenue à l'étape b) une troisième matière thermoplastique conductrice de la lumière pour compléter l'épaisseur de la platine et la paroi tubulaire,
la nature chimique et la température d'injection de chacune des seconde et troisième matières thermoplastiques étant choisies de manière que celle-ci se lie solidement, lors de son injection, à la précédente ou aux précédentes sans déformation de celle(s)-ci.

2. Procédé selon la revendication 1, dans lequel
d) on injecte sur l'ébauche (50) obtenue à l'étape c) une quatrième matière thermoplastique opaque pour former un rebord périphérique (22) de la façade s'étendant vers l'arrière à partir de la platine, la nature chimique et la température d'injection de la quatrième matière thermoplastique étant choisies de manière que celle-ci se lie solidement, lors de son injection, aux première et troisième matières thermoplastiques sans déformation de celles-ci.

3. Procédé selon la revendication 2, dans lequel la face arrière du film (30) reste non recouverte par la troisième matière lors de l'étape c), et est recouverte par la quatrième matière lors de l'étape d), sur une région périphérique de façon à renforcer la liaison entre le film et la quatrième matière.

4. Procédé selon l'une des revendications précédentes, dans lequel la première matière est à base de polycarbonate, la seconde matière est à base d'un mélange de polycarbonate et d'ABS, la troisième matière est à base d'au moins un polymère choisi parmi le polyméthacrylate de méthyle et le polycarbonate et la quatrième matière éventuelle est à base d'ABS.

5. Procédé selon la revendication 4, dans lequel les températures d'injection des matières successives sont d'environ 280 °C pour l'étape b), 240 °C pour l'étape c) et le cas échéant 230 °C pour l'étape d).

6. Procédé selon l'une des revendications précédentes, dans lequel la première matière est sensiblement transparente et des repères et/ou symboles colorés et/ou des plages opaques sont formés par sérigraphie sur la face avant du film avant l'étape a).

7. Procédé selon l'une des revendications précédentes, dans lequel le film est découpé dans une nappe plane et définit pour la platine une face avant plane ou dérivant d'une surface plane par une courbure sans étirement ou contraction le long de la surface.

## Claims

1. Method of manufacturing a dashboard façade (1), in particular for heating the passenger cell of a vehicle, intended to hold at least one rotary control knob (16), comprising a panel (2) defining a front face of the façade and, for each control knob, a tubular partition wall (10) which extends towards the rear of the panel and is joined thereto along the edge of a substantially circular aperture (3-5) housed therein, the tubular partition wall having successively, in the axial direction, a first region (11) adjacent to the aperture and having substantially the same radius as the aperture and housing a control head (17) of the control knob over part at least of the axial length thereof, and a second region (14) of smaller radius than the control head, being connected to the first region by a shoulder (12) which houses and guides in rotation a guide rod (15) of the knob, the control head and the front face bearing, in the vicinity of the aperture, marks and/or symbols (23, 24) which can be placed opposite one another according to the rotary position of the knob and which can be lit up, through the material of the knob and the façade, from a light source disposed behind the latter, **characterised in that** the façade is obtained by the following steps:
a) by placing in a mould (31, 34) a single-layer flat film (30) of a first thermoplastic material having at least one aperture (3a-5a) which is slightly smaller than the aperture (3-5) to be formed in the panel and bearing in the vicinity of this aperture marks or symbols (23) to be obtained on the front face, the film being applied to a plate (31) formed by a first element of the mould and being clamped, along the edge of its aperture, around a boss (32) of the first element which is proud of the plate;
b) by injecting a second thermoplastic material (36) which is opaque into an annular cavity (35) in the mould surrounding the boss and containing an annular zone (33) of the film adjacent to the aperture, which is clad with the material injected against the plate (31) and against the boss (32), the film being pinched in the mould in a sealing-tight manner to the injected material about the annular zone, and the mould being so dimensioned that the film defines the front face of the panel and the second material injected defines part of the tubular partition wall limited to a fraction of its thickness, adjacent to its inner face, and [the mould] ending at the rear with an axial aperture (38) of a radius slightly smaller than that of the control head;
c) by injecting on the blank (37) obtained in stage b) a third thermoplastic material which conducts light in order to make up the thickness of the panel and the tubular partition wall,
the chemical properties and injection temperature of each of the second and third thermoplastic materials being selected so as to bond firmly, upon injection, to the preceding one or ones without deformation thereof.

2. Method according to claim 1, wherein
d) one injects on to the blank (50) obtained in stage c) a fourth thermoplastic material which is opaque in order to form a peripheral flange (22) of the façade, extending towards the rear from the panel, the chemical properties and injection temperature of the fourth thermoplastic material being so selected that it bonds firmly, upon injection, to the first and third thermoplastic materials without deformation thereof.

3. Method according to claim 2, wherein the rear face of the film (30) remains uncovered by the third material during stage c), and is covered by the fourth material during stage d) in a peripheral region so as to reinforce the bond between the film and the fourth material.

4. Method according to one of the preceding claims, wherein the first material has a polycarbonate base, the second material has a base consisting of a mixture of polycarbonate and ABS, the third material has a base of at least one polymer selected from methyl polymethacrylate and polycarbonate, and the fourth, optional material has a base of ABS.

5. Method according to claim 4, wherein the injection temperatures of the successive materials are about 280°C for stage b), 240°C for stage c), and 230°C for stage d) if required.

6. Method according to one of the preceding claims, wherein the first material is substantially transparent and marks and/or coloured symbols and/or opaque fields are formed by serigraphy on the front face of the film before stage a).

7. Method according to one of the preceding claims, wherein the film is cut out from a plane sheet and defines for the panel a front face which is plane or which deviates from a plane surface by a curvature without stretching or contraction along the surface.

## Patentansprüche

1. Verfahren zur Herstellung der Front eines Armaturenbretts, insbesondere für die Heizung des Fahrgastraums eines Fahrzeugs, welches Armaturenbrett zur Aufnahme wenigstens eines drehbaren Bedienungsknopfes (16) bestimmt ist, enthaltend eine Tragplatte (2), die eine Vorderseite der Front bildet, und eine tubusförmige Wand (10) für jeden Bedienungsknopf, die sich von der Tragplatte nach hinten erstreckt und sich an diese längs des Randes einer dort ausgebildeten, im wesentlichen kreisförmigen Öffnung (3-5) anschließt, wobei diese tubusförmige Wand in axialer Richtung benachbart der genannten Öffnung einen ersten Abschnitt (11) aufweist, der im wesentlichen den gleichen Radius wie die Öffnung hat und einen Griffkopf (17) des Bedienungsknopfes auf wenigstens einen Teil der axialen Länge desselben aufnimmt, und im Anschluß daran einen zweiten Abschnitt (14) von kleinerem Radius als der Betätigungskopf aufweist, der mit dem ersten Abschnitt über eine Schulter (12) verbunden ist und einen Führungszapfen (15) des Knopfes aufnimmt und drehbar führt, wobei der Griffkopf und die genannte Vorderseite benachbart der Öffnung Markierungen und/oder Symbole (23, 24) tragen, die einander je nach Drehstellung des Knopfes gegenübergestellt werden können und die durch das Material des Knopfes und der Front von einer Lichtquelle beleuchtet werden können, die hinter der Front angeordnet ist, **dadurch gekennzeichnet, daß** die Front durch die folgenden Schritte erhalten wird:
a) Man bringt in eine Form (31, 34) einen flachen, einschichtigen Film (30) aus einem ersten thermoplastischen Material ein, der wenigstens eine Öffnung (3a-5a) aufweist, die geringfügig kleiner als die in der Tragplatte auszubildende Öffnung (3-5), ist, und der benachbart dieser Öffnung Markierungen oder Symbole (23) aufweist, die auf der genannten Vorderseite erhalten werden sollen, wobei der Film auf eine Platte (31) aufgebracht wird, die von einem ersten Element der Form gebildet ist, und längs des Randes seiner Öffnung an einen Vorsprung (32) des ersten Elements, der von der genannten Platte absteht, eng anliegt;
b) Man gießt ein zweites thermoplastisches, undurchsichtiges Material (36) in einen ringförmigen Hohlraum (35) der Form, der den genannten Vorsprung umgibt und eine ringförmige Zone (33) des der Öffnung benachbarten Films enthält, die durch das eingespritzte Material gegen die Platte (31) und gegen den Vorsprung (32) gedrückt wird, wobei der Film in der Form in dichtem Abschluß mit dem eingespritzten Material um die genannte ringförmige Zone eingeklemmt wird und die Form so dimensioniert ist, daß der Film die Vorderseite der Tragplatte bildet und das zweite eingespritzte Material einen Teil der tubusförmigen Wand bildet, der auf einen Abschnitt seiner Länge benachbart seiner Innenfläche begrenzt ist und hinten in einer axialen Öffnung (38) von geringfügig kleinerem Radius als dem des Betätigungskopfes endet;
c) Man spritzt auf dem im Schritt b) erhaltenen Rohling (37) ein drittes thermoplastisches Material, das lichtleitend ist, um die Dicke der Tragplatte und der tubusförmigen Wand fertigzustellen,
wobei die chemische Zusammensetzung und die Spritztemperatur der zweiten und dritten thermoplastischen Materialien so gewählt sind, daß diese sich nach dem Spritzen mit dem oder den vorhergehenden ohne Verformung desselben bzw. derselben fest verbinden.

2. Verfahren nach Anspruch 1, bei dem
d) man auf den im Schritt c) erhaltenen Rohling (50) ein viertes thermoplastisches, lichtundurchlässiges Material spritzt, um einen Umfangsrand (22) der Front auszubilden, der sich von der Tragplatte nach hinten erstreckt, wobei die chemische Zusammensetzung und die Spritztemperatur des vierten thermoplastischen Materials so gewählt sind, daß dieses sich nach dem Spritzen mit den ersten und dritten thermoplastischen Materialien ohne Verformung derselben fest verbindet.

3. Verfahren nach Anspruch 2, bei dem die Hinterseite des Films (30) durch das dritte Material nach dem Schritt c) unbedeckt bleibt und durch das vierte Material nach dem Schritt d) auf einem Umfangsbereich bedeckt wird, damit die Verbindung zwischen dem Film und dem vierten Material verstärkt wird.

4. Verfahren nach einem der vorhergehenden Ansprüche, bei dem das erste Material ein solches auf Polykarbonatbasis ist, das zweite Material auf einer Mischung aus Polycarbonat und ABS-Kunststoff beruht, das dritte Material eines auf der Grundlage von Methylpolymetacrylat und/oder Polycarbonat ist und gegebenenfalls das vierte Material auf ABS-Kunststoff beruht.

5. Verfahren nach Anspruch 4, bei dem die Spritztemperaturen der aufeinanderfolgenden Materialien etwa 280°C für den Schritt b), 240°C für den Schritt c) und gegebenenfalls 230°C für den Schritt d) sind.

6. Verfahren nach einem der vorhergehenden Ansprüche, bei dem das erste Material im wesentlichen transparent ist und die Markierungen und/oder farbigen Symbole und/oder undurchsichtigen Stellen durch Serigraphie auf der Vorderseite des Films vor dem Schritt a) ausgebildet werden.

7. Verfahren nach einem der vorhergehenden Ansprüche, bei dem der Film in eine ebene Bahn zerschnitten wird und für die Tragplatte eine ebene Vorderseite oder Ableitung einer ebenen Fläche durch eine Krümmung ohne Dehnung oder Stauchung längs der Oberfläche bildet.
